# EUROPÄISCHE PATENTSCHRIFT

(11) **EP 0 479 286 B1**
(45) Veröffentlichungstag und Bekanntmachung des Hinweises auf die Patenterteilung: **31.08.1994**
(21) Anmeldenummer: 91116863.1
(22) Anmeldetag: 02.10.1991
(51) Int. Cl.: B01D 53/34

(54) **Verfahren zur Reinigung von Dioxine und Furane enthaltendem Abgas**
Process for purifying exhaust gas containing dioxines and furanes
Procédé pour purifier des gaz contenant des dioxines et des furanes

(30) Priorität: 05.10.1990 DE 4031646
(43) Veröffentlichungstag der Anmeldung: 08.04.1992
(73) Patentinhaber: Linde Aktiengesellschaft, 65189 Wiesbaden (DE)
(72) Erfinder: Berger, Michael, Dr. rer.nat., W-8023 Pullach (DE)
(74) Vertreter: Schaefer, Gerhard, Dr.

(56) Entgegenhaltungen:
- EP-A- 0 208 592
- EP-A- 0 284 227
- DE-A- 3 426 059
- DE-A- 3 813 613
- DE-A- 3 827 086

## Beschreibung

Die Erfindung betrifft ein Verfahren zur Reinigung von Dioxine und Furane enthaltendem Abgas mittels Adsorption, wobei das mit Schadstoffen beladene Adsorptionsmittel unter Inertgasbedingungen zu einer weiteren Bearbeitung oder zur Ablagerung transportiert wird.

Bei der Rauchgasreinigung in Heizkraftwerken und Müllverbrennungsanlagen werden zur Enfernung von Schadstoffen wie z.B. Quecksilber, Dioxine und Furane Adsorptionsstufen mit Aktivkohle, Aktivkoks oder Kalk-Kohle-Gemischen als Adsorptionsmittel eingesetzt. Als Aktivkohle kommt beispielsweise Herdofenkoks aus Braunkohle in Frage. Aktivkoks kann z.B. als Formaktivkoks aus Steinkohle gewonnen werden. Kalk-Kohle-Gemische sind u.a. als Handelsware erhältlich. Das nach der Rauchgasreinigung mit Schadstoffen beladene Adsorptionsmittel muß vor seiner Entsorgung zwischengelagert bzw. transportiert werden. Die Entsorgung selbst kann unter Einhaltung hoher Sicherheits- und Umweltauflagen durch Verbrennung oder Deponierung geschehen.

Die beschriebene Technik der weitergehenden Rauchgasreinigung durch Adsorption löst zwar das Emissionsproblem. Sie schafft aber ein neues Abfall- und Sicherheitsproblem in Form hochtoxisch kontaminierten Adsorptionsmittels. Bisher soll dieses Adsorptionsmittel, z.B. Aktivkohle oder Aktivkoks, in Silos zwischengelagert und chargenweise pneumatisch, mechanisch oder per Silolastkraftwagen einer anlageninternen oder externen thermischen Verwertung zugeführt werden. Als anlageninterne Verwertung sind Müllbunker und Feuerung zu nennen. Eine externe Verwertung kommt bei Heizkraftwerken mit Schmelzkammerfeuerung in Frage. Im Fall der Kalk-Kohle-Sorbentien muß aufgrund des hohen Salzgehaltes vor einer Deponierung das Material zur Inertisierung einer physikalisch-chemischen Vorbehandlung zugeführt werden. Bekannt ist, daß Lagerung und Transport aus Sicherheitsgründen unter Inertgasschutz erfolgen müssen. Das toxische Potential bleibt aber dabei erhalten. Entsprechend groß sind weitere Sicherheitsauf lagen und genehmigungsrechtliche Probleme.

Der Erfindung liegt daher die Aufgabe zugrunde, ein Verfahren der eingangs genannten Art so auszugestalten, daß auf wirtschaftliche Weise eine Dekontaminierung des mit Schadstoffen beladenen Adsorptionsmittels, insbesondere eine Zerstörung von Dioxinen und Furanen, erreicht wird.

Die Randbedingungen für die Zerstörung von Dioxinen und Furanen an Feststoffen sind im Grundsatz bereits bekannt und wurden bisher bei Flugaschen und bei kontaminierten Böden erforscht. Es geht dabei im Prinzip um geschlossene Reaktoren, bei denen unter Sauerstoffmangelbedingungen der Feststoff chargenweise oder quasikontinuierlich in kompakter Form hinreichend lange auf ca. 150 bis ca. 800 °C erhitzt und dann abgekühlt wird. Auf die primäre Dioxinzersetzung folgt unter diesen Bedingungen keine Dioxinrückbildung mehr.

Der vorliegenden Erfindung liegt die Erkenntnis zugrunde, daß beim Transport des Adsorptionsmittels unter Inertgasschutz ideale Voraussetzungen für eine ergänzende Dioxin- und Furanzerstörung bestehen, sofern in den Transportweg Erhitzungs- und Abkühlzonen eingeschaltet werden. Sauerstoffmangelbedingungen sind durch die Inertisierung bereits gegeben. Da das transportierte Adsorptionsmittel mit relativ hoher Oberfläche vorliegt und außerdem während des Transports eine Vermischung des Adsorptionsmittels erfolgt, wird auch bei kurzen Aufheiz- und Abkühlphasen eine weitgehende Zerstörung der Dioxine und Furane erreicht. Aus diesen Gründen kommt man auch mit relativ niedrigen Temperaturen aus. Demzufolge wird das Adsorptionsmittel vorzugsweise auf Temperaturen von ca. 250 bis 450 °C aufgeheizt. Beheizen und Kühlen können über übliche Strahlungs- oder Leitfähigkeitsprozesse geschehen. Beispielsweise können Infrarotstrahler eingesetzt werden oder die Transportleitungen von außen mittels eines Heiz- oder Kühlmediums aufgeheizt oder abgekühlt werden. Gemäß einer besonders bevorzugten Ausführungsform der Erfindung wird zur Abkühlung des Adsorptionsmittels flüssiger Stickstoff oder tiefkaltes Stickstoffgas in den Transportweg eingedüst.

Als Adsorptionsmittel wird vorzugsweise Aktivkohle, Aktivkoks oder ein Kalk-Kohle-Gemisch verwendet. Mit diesen Adsorptionsmitteln können Schadgase, wie SO₂, HCl, HF, H₂S, NH₃, basische Amine und gasförmige Schwermetalle, insbesondere Quecksilber, abgeschieden werden. Außerdem werden Feinstäube und damit auch die daran anhaftenden partikelgebundenen Schadstoffe wie Cadmium und Blei aus dem zu reinigenden Abgas herausgefiltert. Besonders gut werden durch diese Adsorptionsmittel Dioxine und Furane zurückgehalten, die z.B. in Abfallverbrennungsanlagen entstehen.

Wird als Adsorptionsmittel Aktivkohle, Aktivkoks oder ein Kalk-Kohle-Gemisch verwendet, so kann der Transport des Adsorptionsmittels mechanisch, z.B. mittels eines Fließbandes erfolgen. Gemäß einer bevorzugten Ausführungsform der Erfindung wird das Adsorptionsmittel aber pneumatisch mittels Stickstoff transportiert. Auf diese Weise können zwei Aufgaben gleichzeitig erfüllt werden, nämlich Transport und Inertisierung des Adsorptionsmittels. Erfolgt darüber hinaus die Abkühlung des Adsorptionsmittels durch Eindüsung von flüssigem Stickstoff oder von tiefkaltem Stickstoffgas, so kann das resultierende Stickstoffgas gleichzeitig als Inertisierungs- und Transportmedium genutzt werden.

Gemäß einer Weiterbildung des Erfindungsgedankens wird das Adsorptionsmittel im Anschluß an das Erhitzen des Adsorptionsmittels mittels einer Feststoff-Gas-Phasentrennung von flüchtigen und desorbierbaren Stoffen befreit. Hierzu kann beispielsweise das Adsorptionsmittel nach einer Aufheizzone einem Zyklon zugeführt werden, in dem Quecksilber, Kondensate etc. aus dem Adsorptionsmittel abgeschieden werden. Die abgeschiedenen Schadstoffe werden vorzugsweise der Rauchgasreinigung zugeführt, die geeignete Senken für diese Schadstoffe aufweist.

Insgesamt kann durch die erfindungsgemäße Kombination der brandschutzbedingten Inertisierung mit definierten Aufheiz- und Abschreckzonen in den Transportstrecken, aus toxisch kontaminiertem Adsorptionsmittel durch die Zerstörung von Dioxinen und Furanen ein relativ unverfänglicher Abfall- bzw. Brennstoff gewonnen werden, der hinsichtlich Gefährdungspotential, Handling oder Genehmigungsfragen weitaus weniger Probleme aufwirft. Hierdurch wird beispielsweise der Einsatz von Aktivkohle- oder Aktivkoksfiltern hinter Verbrennungsanlagen überhaupt erst handhabungssicher gemacht.

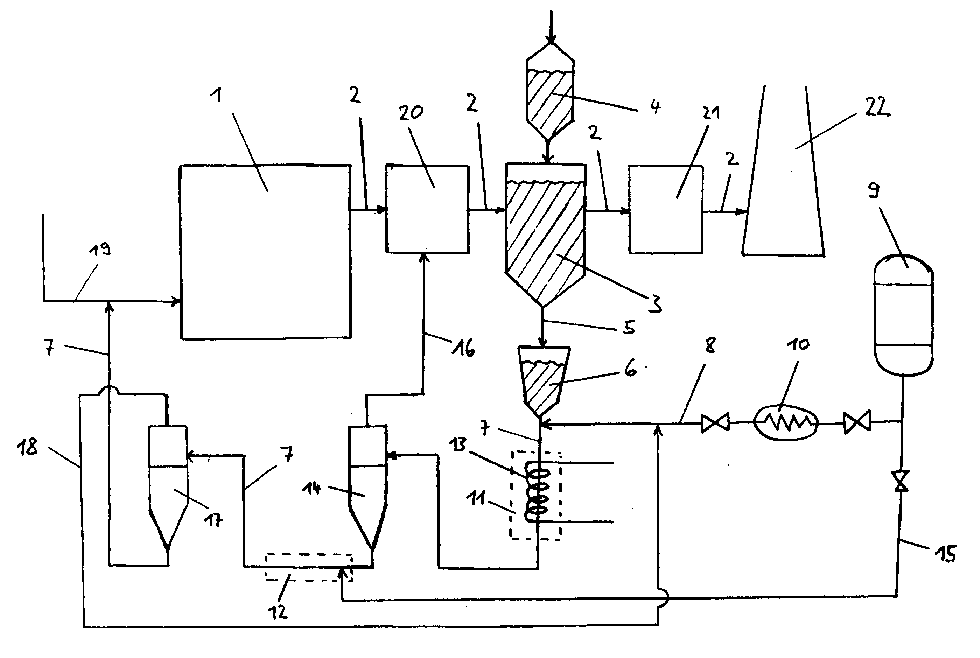

Im folgenden soll die Erfindung anhand eines in der Zeichnung schematisch dargestellten Ausführungsbeispiels näher erläutert werden.

Die Figur zeigt ein Fließschema eines Verfahrens zur Abgasreinigung einer Müllverbrennungsanlage mit integrierter Aktivkoksdekontamination.

Das Abgas einer in der Zeichnung nicht näher dargestellten Müllverbrennungsanlage 1, die über eine Müllzufuhr 19 mit Haus- und/oder Gewerbemüll beschickt wird, wird über Abgasleitung 2 nacheinander einer herkömmlichen Rauchgasreinigung 20, z.B. einer Wäsche, einem Aktivkoksfilter 3 und einer Denitrifikationsstufe 21, z.B. einem Formaktivkohlefilter, zugeführt. Das gereinigte Abgas wird schließlich über einen Kamin 22 abgezogen. Als Aktivkoks dient Braunkohlenkoks, der sehr gute Adsorptionseigenschaften, insbesondere im Bezug auf polyhalogenierte Verbindungen wie Dioxine und Furane, besitzt. Verbrauchter, d.h. mit Schadstoffen beladener Aktivkoks wird über Leitung 5 abgezogen und einem Dosierbehälter 6 zugeführt. Frischer Aktivkoks wird über einen Aufgabebehälter 4 in den Aktivkoksfilter 3 nachgefüllt. Der verbrauchte Aktivkoks enthält die aus dem Abgas der Müllverbrennungsanlage 1 ausgefilterten polyhalogenierten Verbindungen, insbesondere Dioxine und Furane, in hoher Konzentration. Zur Verwertung des Aktivkokses wird dieser nach mehreren Reinigungsschritten in die Feuerung der Müllverbrennungsanlage 1 zurückgeführt. Hierzu dient eine pneumatisch mittels Stickstoffgas betriebene Förderleitung 7, die über eine Gasleitung 8 mit Stickstoffgas versorgt wird. Der Stickstoff wird in einem Flüssiggasbehälter 9 bereitgestellt. Der Flüssigstickstoff wird in einem Verdampfer 10 in den gasförmigen Zustand überführt, um die pneumatische Förderleitung 7 betreiben zu können. Das Stickstoffgas dient nicht nur als Transportmedium für den Aktivkoks, sondern liefert darüber hinaus die für eine Vernichtung der Dioxine und Furane nötige Inertgasatmosphäre. Außerdem wird auf diese Weise möglichen Brandgefahren vorgebeugt. Zur Zerstörung der an dem Aktivkoks adsorbierten Dioxine und Furane sind eine Aufheizzone 11 und eine Abkühlzone 12 in die Förderleitung 7 eingebaut. Zum Aufheizen des Aktivkokses auf Temperaturen von ca. 250 bis ca. 450 °C wird Heißdampf, der mittels des Rauchgases aus der Müllverbrennungsanlage 1 erzeugt wurde, über einen Wärmetauscher 13 mit dem Aktivkoks in indirekten Wärmeaustausch gebracht. Der heiße Aktivkoks wird anschließend einem Zyklon 14 zugeführt, in dem der Aktivkoks mittels Feststoff-Gas-Phasentrennung von flüchtigen und desorbierbaren Stoffen befreit wird. Die abgeschiedenen Schadstoffe werden über Leitung 16 abgezogen und der Rauchgasreinigung 20 der Müllverbrennungsanlage 1 zugeführt, die geeignete Senken für diese Schadstoffe aufweist. Der Aktivkoks gelangt danach zur Abkühlzone 12, in der der heiße Aktivkoks schlagartig mittels Eindüsung von flüssigem Stickstoff abgekühlt wird. Der flüssige Stickstoff wird dem Flüssiggasbehälter 9 entnommen und über Leitung 15 der Abkühlzone 12 zugeleitet. In einem nachgeschalteten Zyklon 17 wird der in der Abkühlzone 12 verdampfte Stickstoff abgeschieden und über Leitung 18 zur Gasleitung 8 zurückgeführt. Der zurückgeführte Stickstoff wird dem vom Verdampfer 10 kommenden Stickstoffgas zugemischt und wird als Transportmedium für den Aktivkokstransport in der Förderleitung 7 genutzt. Alternativ zur direkten Eindüsung des flüssigen Stickstoffs in die Abkühlzone 12 ist es auch möglich, den flüssigen Stickstoff in indirekten Wärmeaustausch mit dem Aktivkoks zu bringen. Hierzu kann der flüssige Stickstoff beispielsweise in eine hohle Wandung der Förderleitung 7 eingeleitet werden. Der verdampfte Stickstoff wird anschließend aus der hohlen Wandung wieder abgezogen und der Gasleitung 8 zugeführt, um als Transportmedium für den Aktivkoks zu dienen. Der Zyklon 17 zur Abtrennung des Stickstoffs vom Aktivkokstransport ist in diesem Fall nicht erforderlich. Aufgrund der Erhitzung und anschließenden Abkühlung des Aktivkokses unter Inertgasbedingungen wird eine Zerstörung der Dioxine und Furane erreicht. Dabei wirken sich die Mischungsvorgänge infolge des Aktivkokstransports förderlich auf die Abbaureaktionen aus. Auch die Tatsache, daß der Aktivkoks in der Förderleitung 7 mit großer Oberfläche vorliegt, beschleunigt den Abbau der Dioxine und Furane. Deshalb sind relativ kurze Aufheiz- und Abkühlzeiten ausreichend, um eine weitgehende Zerstörung der Dioxine und Furane zu erreichen. Der so behandelte Aktivkoks wird schließlich zur Feuerung der Müllverbrennungsanlage 1 zurückgeführt.

## Patentansprüche

1. Verfahren zur Reinigung von Dioxine und Furane enthaltendem Abgas mittels Adsorption, wobei das mit Schadstoffen beladene Adsorptionsmittel unter Inertgasbedingungen zu einer weiteren Bearbeitung oder zur Ablagerung transportiert wird, dadurch gekennzeichnet, daß während des Transports das Adsorptionsmittel auf Temperaturen von ca. 150 bis ca. 800°C erhitzt und anschließend abgekühlt wird.

2. Verfahren nach Anspruch 1, dadurch gekennzeichnet, daß das Adsorptionsmittel auf Temperaturen von ca. 250 bis ca. 450°C erhitzt wird.

3. Verfahren nach Anspruch 1 oder 2, dadurch gekennzeichnet, daß als Adsorptionsmittel Aktivkohle, Aktivkoks oder ein Kalk-Kohle-Gemisch verwendet wird.

4. Verfahren nach einem der Ansprüche 1 bis 3, dadurch gekennzeichnet, daß das Adsorptionsmittel mittels Stickstoffgas pneumatisch transportiert wird.

5. Verfahren nach einem der Ansprüche 1 bis 4, dadurch gekennzeichnet, daß die Abkühlung des Adsorptionsmittels durch Eindüsen von flüssigem Stickstoff oder tiefkaltem Stickstoffgas in den Transportweg erfolgt.

6. Verfahren nach einem der Ansprüche 1 bis 5, dadurch gekennzeichnet, daß im Anschluß an das Erhitzen des Adsorptionsmittels das Adsorptionsmittel mittels einer Feststoff-Gas-Phasentrennung von flüchtigen und desorbierbaren Stoffen befreit wird.

## Claims

1. Process for cleaning flue gas containing dioxins and furans by means of adsorption, in which the adsorption medium laden with pollutants is transported for further processing or for storage under inert gas conditions, characterised in that during transportation the adsorption medium is heated to temperatures of approx. 150 to approx. 800°C and then cooled.

2. Process according to claim 1, characterised in that the adsorption medium is heated to temperatures of approx. 250 to approx. 450°C.

3. Process according to claim 1 or 2, characterised in that activated carbon, activated coke or a lime and carbon mixture is used as adsorption medium.

4. Process according to one of claims 1 to 3, characterised in that the adsorption medium is transported pneumatically by means of nitrogen gas.

5. Process according to one of claims 1 to 4, characterised in that the cooling of the adsorption medium is effected by injecting liquid nitrogen or low-temperature nitrogen gas into the transportation path.

6. Process according to one of claims 1 to 5, characterised in that following the heating of the adsorption medium, the adsorption medium is freed of volatile and desorbable substances by means of solid/gaseous phase separation.

## Revendications

1. Procédé de purification d'effluents gazeux contenant des dioxines et des furannes par adsorption, l'agent d'adsorption chargé de substances nocives étant entraîné sous atmosphère de gaz inertes vers une zone ultérieure de traitement ou à la décharge, caractérisé en ce que, pendant qu'il est entraîné, l'agent d'adsorption est réchauffé à des températures d'environ 150 à environ 800°C, puis est ensuite refroidi.

2. Procédé selon la revendication 1 caractérisé en ce que l'agent d'adsorption est chauffé à des températures d'environ 250 à environ 450°C.

3. Procédé selon la revendication 1 ou 2, caractérisé en ce que, comme agent d'adsorption, on emploie du charbon actif, du coke actif ou un mélange chaux-charbon.

4. Procédé selon l'une quelconque des revendications 1 à 3, caractérisé en ce que l'agent d'adsorption est entraîné par transport pneumatique au moyen d'azote gazeux.

5. Procédé selon l'une quelconque des revendications 1 à 4 caractérisé en ce que le refroidissement de l'agent d'adsorption se fait par injection dans le chemin de transport d'azote liquide ou d'azote gazeux refroidi à très basse température.

6. Procédé selon l'une quelconque des revendications 1 à 5 caractérisé en ce que, à la suite de son réchauffage, l'agent d'adsorption est débarrassé des substance volatiles et susceptibles d'être désorbées par une séparation de phase solides-gaz.
